# EUROPÄISCHE PATENTSCHRIFT

(11) **EP 2 991 320 B1**
(45) Veröffentlichungstag und Bekanntmachung des Hinweises auf die Patenterteilung: **17.07.2019**
(21) Anmeldenummer: 14182111.6
(22) Anmeldetag: 25.08.2014
(51) Int. Cl.: H04L 29/12, G05B 19/418

(54) **VERFAHREN ZUR ERMITTLUNG VON KOMMUNIKATIONSGERÄTENAMEN INNERHALB EINES INDUSTRIELLEN AUTOMATISIERUNGSSYSTEMS, DIAGNOSEEINHEIT UND DIAGNOSEDATENBEREITSTELLUNGSEINHEIT**
METHOD FOR DETERMINING NAMES OF COMMUNICATION DEVICES WITHIN AN INDUSTRIAL AUTOMATION SYSTEM, DIAGNOSIS UNIT AND DIAGNOSIS DATA PROVIDING UNIT
PROCÉDÉ DE DÉTERMINATION DE NOMS D'APPAREILS DE COMMUNICATION DANS UN SYSTÈME D'AUTOMATISATION INDUSTRIEL, UNITÉ DE DIAGNOSTIC ET UNITÉ DE MISE À DISPOSITION DE DONNÉES DE DIAGNOSTIC

(43) Veröffentlichungstag der Anmeldung: 02.03.2016
(73) Patentinhaber: Siemens Aktiengesellschaft, 80333 München (DE)
(72) Erfinder: Albrecht, Harald, 90475 Nürnberg (DE)

(56) Entgegenhaltungen:
- WO-A1-2013/137884
- CHESHIRE M KROCHMAL APPLE INC S: "Multicast DNS; rfc6762.txt", MULTICAST DNS; RFC6762.TXT, INTERNET ENGINEERING TASK FORCE, IETF; STANDARD, INTERNET SOCIETY (ISOC) 4, RUE DES FALAISES CH- 1205 GENEVA, SWITZERLAND, 20. Februar 2013 (2013-02-20), Seiten 1-70, XP015090289, [gefunden am 2013-02-20]

## Beschreibung

Verfahren zur Ermittlung von Kommunikationsgerätenamen innerhalb eines industriellen Automatisierungssystems.

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

In WO 2007/144364 A1 ist ein Verfahren zur Vernetzung einer automatisierten Anlage beschrieben, die zumindest eine Zelle mit einem Subnetz umfasst. Das Subnetz ist über einen Router an ein weiteres Subnetz der automatisierten Anlage angebunden. Zur Vernetzung der automatisierten Anlage wird eine Multicastgruppe bereitgestellt, die sich über beide Subnetze erstreckt. Mittels der Multicastgruppe wird eine Kommunikationsnetzadresse einer Kommunikationsnetzschnittstelle einer Baugruppe detektiert. Dabei ist die Baugruppe der Multicastgruppe zuvor über die Kommunikationsnetzadresse beigetreten, und die Kommunikationsnetzschnittstelle ist zuvor an das Subnetz angeschlossen worden. Über die Kommunikationsnetzadresse wird ein Name an die Kommunikationsnetzschnittstelle der Baugruppe zugewiesen. In einem weiteren Schritt erfolgt eine Ermittlung einer weiteren Kommunikationsnetzadresse der Kommunikationsnetzschnittstelle der Baugruppe, die zumindest einen Teil einer numerischen Repräsentation des Namens aufweist.

Aus der älteren europäischen Patentanmeldung mit dem Anmeldeaktenzeichen 14166194.2 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

Die ältere europäische Patentanmeldung mit dem Anmeldeaktenzeichen 14166376.5 betrifft ein Verfahren zur Bereitstellung eines Namensdienstes innerhalb eines industriellen Kommunikationssystems, bei dem IPv6-Präfixe durch Router mittels Nachrichten mit Router-Bekanntgaben (Router Advertisements) in jeweils unterlagerten Teilnetzen verbreitet werden. Die Router-Bekanntgaben umfassen einen topologischen bzw. hierarchischen Namensbestandteil des jeweiligen Routers, wobei der topologische bzw. hierarchische Namensbestandteil einer räumlichen oder hierarchischen Anordnung des jeweiligen Routers zugeordnet ist. Router-Bekanntgaben mit Namensinformationen aus überlagerten Teilnetzen werden durch unterlagerten Teilnetzen zugeordnete Router entgegen genommen und um einen dem jeweiligen Router zugeordneten topologischen bzw. hierarchischen Namensbestandteil ergänzt und innerhalb des jeweiligen unterlagerten Teilnetzes verbreitet. Aus topologischen bzw. hierarchischen Namensbestandteilen und einem innerhalb ihres jeweiligen Teilnetzes eindeutigen Namensbestandteil erzeugen Kommunikationsendgeräte, also Kommunikationsgeräte ohne Routing-Funktionen, selbständig ihren Gerätenamen. Hierdurch wird eine einfache Inbetriebnahme von Serienmaschinen ermöglicht, da aufgrund oben genannter automatischer Vervollständigung lediglich auf Maschinenebene eindeutige Namen auszuwählen sind.

In industriellen Automatisierungssystemen werden Namens- bzw. Kennzeichnungssysteme verwendet, um beispielsweise Systemkomponenten, wie Speicherprogrammierbare Steuerungen, Feldgeräte oder Bedien- und Beobachtungsstationen, systematisch funktions- bzw. ortsbezogen zu charakterisieren. Bei PROFINETbasierten Automatisierungsgeräten sind Gerätenamen sogar erforderlich, um Kommunikationsbeziehungen zwischen Automatisierungsgeräten aufzubauen. Allgemein wird auch eine systematische Fehlersuche und -behebung durch eine Verwendung bzw. Analyse von Gerätenamen deutlich vereinfacht.

Das Dokument WO2013137884 offenbart ein Verfahren zur Vernetzung einer automatisierten Anlage. Das Subnetz ist über einen Router an ein weiteres Subnetz der automatisierten Anlage angebunden. Zur Vernetzung der automatisierten Anlage wird eine Datenbase zur Abbildung von Gerätenamen zu Netzadressen bereitgestellt, wobei mehrere Adressenversionen gespeichert werden.

Der vorliegenden Erfindung liegt die Aufgabe zugrunde, ein Verfahren zur schnellen und zuverlässigen Ermittlung von Kommunikationsgerätenamen in einem industriellen Automatisierungssystem zu schaffen sowie geeignete Vorrichtungen zu dessen Durchführung anzugeben.

Diese Aufgabe wird erfindungsgemäß durch ein Verfahren mit den in Anspruch 1 angegebenen Merkmalen gelöst. Vorteilhafte Weiterbildungen der vorliegenden Erfindung sind in den abhängigen Patentansprüchen angegeben.

Entsprechend dem Verfahren zur Ermittlung von Kommunikationsgerätenamen innerhalb eines industriellen Automatisierungssystems werden mittels einer Diagnoseeinheit Konfigurationsdaten eines ausgewählten Kommunikationsgeräts abgefragt, dessen Kommunikationsgerätename zu ermitteln ist. Dabei umfassen die Konfigurationsdaten einen Geräteidentifikator und eine Kommunikationsnetzadresse des ausgewählten Kommunikationsgeräts sowie eine Kommunikationsnetzadresse und einen Teil- bzw. Subnetzidentifikator einer lokalen Konfigurationseinheit, die einem das ausgewählte Kommunikationsgerät umfassenden Teil- bzw. Subnetz zugeordnet ist und - etwa als Relay - für einen Konfigurationsserver Konfigurationsanfragen bzw. Konfigurationsdaten weiterleitet. Anhand des Teil- bzw. Subnetzidentifikators können beispielsweise auch Kommunikationsadressen von Kommunikationsgeräten aufgelöst werden, die global nicht eindeutig sind.

Erfindungsgemäß übermittelt die Diagnoseeinheit anhand der abgefragten Konfigurationsdaten ein Datagramm zur Namensabfrage an eine Diagnosedatenbereitstellungseinheit, die dem das ausgewählte Kommunikationsgerät umfassenden Teil- bzw. Subnetz zugeordnet ist. Anhand des Geräteidentifikators bzw. der Kommunikationsnetzadresse des ausgewählten Kommunikationsgeräts löst die Diagnosedatenbereitstellungseinheit eine inverse Adressauflösungsabfrage aus. Dabei basiert die inverse Adressauflösungsabfrage auf Informationen über Zuordnungen zwischen Gerätenamen und Kommunikationsnetzadressen, die innerhalb des das ausgewählte Kommunikationsgerät umfassenden Teil- bzw. Subnetzes entsprechend einem Namensauflösungsprotokoll verbreitet werden. Diese Informationen können beispielsweise entsprechend Multicast DNS Protokoll (mDNS) als Namensauflösungsprotokoll verbreitet werden. Die Kommunikationsnetzadresse des ausgewählten Kommunikationsgeräts wird durch die inverse Adressauflösungsabfrage erfindungsgemäß auf dessen Kommunikationsgerätenamen abgebildet.

Ist der Kommunikationsgerätename ermittelt, kann beispielsweise überprüft werden, ob einem Kommunikationsgerät der korrekte Kommunikationsgerätename zugewiesen worden ist, oder ob einem Kommunikationsgerätenamen das falsche Kommunikationsgerät zugeordnet worden ist. Da bei der Ermittlung von Kommunikationsgerätenamen im jeweiligen Kommunikationsgerät tatsächlich hinterlegte Daten verwendet werden, können Probleme aufgrund veralteter oder fehlerhafter Daten im Rahmen einer Fehlersuche vermieden werden.

Entsprechend einer vorteilhaften Ausgestaltung der vorliegenden Erfindung wird überprüft, ob die Diagnoseeinheit dem das ausgewählte Kommunikationsgerät umfassenden Teil- bzw. Subnetz zugeordnet ist. Bei einem negativen Überprüfungsergebnis wird das Datagramm zur Namensabfrage entsprechend den abgefragten Konfigurationsdaten des ausgewählten Kommunikationsgeräts an eine der Diagnosedatenbereitstellungseinheit zugeordnete lokale Konfigurationseinheit übermittelt. Durch den Teil- bzw. Subnetzidentifikator kann dabei beispielsweise eine dem ausgewählten Kommunikationsgerät an der lokalen Konfigurationseinheit zugeordnete Schnittstelle bezeichnet werden. Somit kann das erfindungsgemäße Verfahren sowohl teil- bzw. subnetzübergreifend als auch innerhalb eines Teil- bzw. Subnetzes zur Ermittlung von Kommunikationsgerätenamen verwendet werden.

Die Konfigurationsdaten des ausgewählten Kommunikationsgeräts können beispielsweise aus Aufzeichnungen einer Konfigurationsdatenbank, die dem Konfigurationsserver oder einem Engineering-System zugeordnet ist, oder aus Datenverkehr zur Konfigurationsübermittlung an das ausgewählte Kommunikationsgerät abgefragt werden. Falls der Datenverkehr zur Konfigurationsübermittlung über einen Router an das ausgewählte Kommunikationsgerät weitergeleitet wird, werden durch den Router vorzugsweise Informationen über den Teil- bzw. Subnetzidentifikator und über die Kommunikationsnetzadresse der lokalen Konfigurationseinheit eingefügt. Dabei umfasst der Router die lokale Konfigurationseinheit. Somit ist eine Ermittlung von Kommunikationsgerätenamen auch dann möglich, wenn das ausgewählte Kommunikationsgerät beispielsweise hinter einer lokalen Konfigurationseinheit bzw. einem Konfigurationsdaten-Relay an ein industrielles Kommunikationsnetz angeschlossen ist und insbesondere noch keine routbare IP-Adresse besitzt. Das Datagramm zur Namensabfrage wird vorzugsweise entsprechend den abgefragten Konfigurationsdaten an die lokale Konfigurationseinheit übermittelt, die der Diagnosedatenbereitstellungseinheit zugeordnet ist.

Entsprechend einer bevorzugten Ausgestaltung der vorliegenden Erfindung umfasst zumindest jedes Kommunikationsgerät innerhalb des das ausgewählte Kommunikationsgerät umfassenden Teil- bzw. Subnetzes jeweils eine Protokollverarbeitungseinheit zur Erzeugung und Auswertung von Nachrichten entsprechend Multicast DNS Protokoll. In diesem Fall steuert die Diagnosedatenbereitstellungseinheit ihre jeweils zugeordnete Protokollverarbeitungseinheit zur Durchführung der inversen Adressauflösungsabfrage an. Dabei bildet die Protokollverarbeitungseinheit die Kommunikationsnetzadresse des ausgewählten Kommunikationsgeräts auf dessen Kommunikationsgerätenamen ab. Dies ermöglicht eine besonders zuverlässige Implementierung der vorliegenden Erfindung.

Die Diagnoseeinheit zur Durchführung eines Verfahrens entsprechend obigen Ausführungen ist dafür ausgestaltet und eingerichtet, Konfigurationsdaten eines ausgewählten Kommunikationsgeräts abzufragen, dessen Kommunikationsgerätename zu ermitteln ist. Dabei umfassen die Konfigurationsdaten einen Geräteidentifikator und eine Kommunikationsnetzadresse des ausgewählten Kommunikationsgeräts sowie eine Kommunikationsnetzadresse und einen Teil- bzw. Subnetzidentifikator einer lokalen Konfigurationseinheit, die einem das ausgewählte Kommunikationsgerät umfassenden Teil- bzw. Subnetz zugeordnet ist und für einen Konfigurationsserver Konfigurationsanfragen bzw. Konfigurationsdaten weiterleitet. Außerdem ist die erfindungsgemäße Diagnoseeinheit dafür ausgestaltet und eingerichtet, anhand der abgefragten Konfigurationsdaten ein Datagramm zur Namensabfrage an eine Diagnosedatenbereitstellungseinheit zu übermitteln, die dem das ausgewählte Kommunikationsgerät umfassenden Teil- bzw. Subnetz zugeordnet ist.

Die Diagnosedatenbereitstellungseinheit zur Durchführung eines Verfahrens entsprechend obigen Ausführungen ist dafür ausgestaltet und eingerichtet, anhand eines Geräteidentifikators bzw. einer Kommunikationsnetzadresse eines ausgewählten Kommunikationsgeräts eine inverse Adressauflösungsabfrage auszulösen, die auf Informationen über Zuordnungen zwischen Gerätenamen und Kommunikationsnetzadressen basiert, die innerhalb des das ausgewählte Kommunikationsgerät umfassenden Teil- bzw. Subnetzes entsprechend einem Namensauflösungsprotokoll verbreitet werden. Dabei erfolgt durch die inverse Adressauflösungsabfrage eine Abbildung der Kommunikationsnetzadresse des ausgewählten Kommunikationsgeräts auf dessen Kommunikationsgerätenamen.

Die vorliegende Erfindung wird nahfolgend an einem Ausführungsbeispiel anhand der Zeichnung näher beschrieben. Es zeigt
- Figur 1: ein industrielles Kommunikationsnetz mit einer Diagnosestation, einem Konfigurationsserver, einem Konfigurationsdaten-Relay und einem ausgewählten Kommunikationsgerät,
- Figur 2: ein industrielles Kommunikationsnetz, bei dem der Konfigurationsserver und das ausgewählte Kommunikationsgerät über einen Router miteinander verbunden sind.

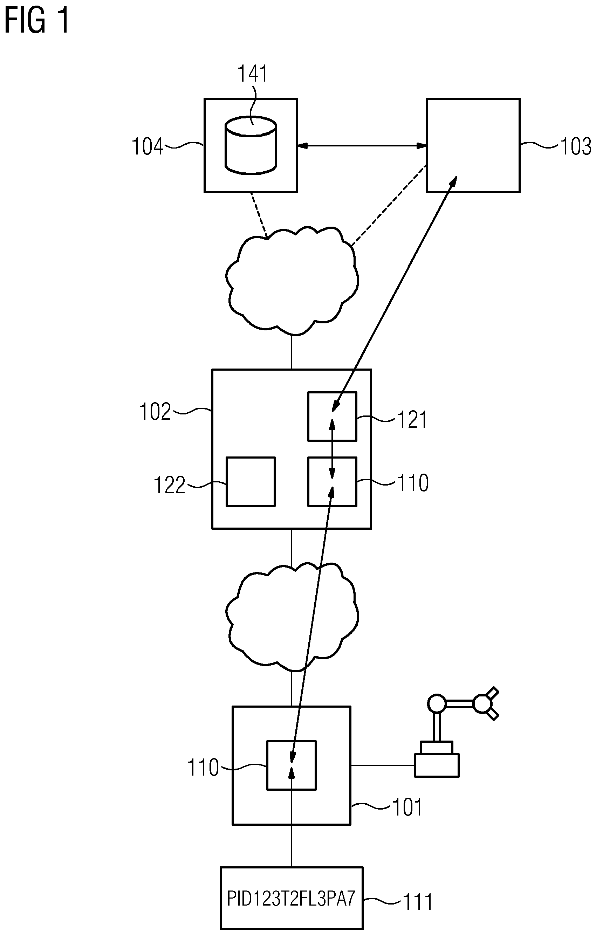

Das in Figur 1 dargestellte Kommunikationsnetz umfasst neben einem Konfigurationsserver 104, einem Konfigurationsdaten-Relay 102 mit einer lokalen Konfigurationseinheit 122 und einem ausgewählten Kommunikationsgerät 101 eine Diagnosestation 103. Der Konfigurationsserver 104 kann beispielsweise eine Komponente eines Engineering-Systems zur Projektierung eines industriellen Automatisierungssystems sein. Der Konfigurationsdaten-Relay 102 nimmt im vorliegenden Ausführungsbeispiel stellvertretend für den Konfigurationsserver 104 Konfigurationsanfragen entgegen und leitet Konfigurationsdaten vom Konfigurationsserver 104 an zu konfigurierende Kommunikationsgeräte weiter.

Die Diagnosestation 103 ist als Diagnoseeinheit zur Ermittlung eines das ausgewählte Kommunikationsgerät 101 funktional bzw. räumlich charakterisierenden Gerätenamens 111 vorgesehen. Das ausgewählte Kommunikationsgerät 101 kann beispielsweise einem industriellen Automatisierungsgerät, wie einer Speicherprogrammierbaren Steuerung oder einem Feldgerät, zugeordnet oder in ein industrielles Automatisierungsgerät integriert sein, so dass durch den Gerätenamen 111 auch das jeweilige industrielle Automatisierungsgerät charakterisiert werden kann.

Die Diagnosestation 103 hat im vorliegenden Ausführungsbeispiel Zugriff auf Aufzeichnungen einer Konfigurationsdatenbank 141, die dem Konfigurationsserver 104 zugeordnet ist, bzw. auf Datenverkehr zur Konfigurationsübermittlung an das ausgewählte Kommunikationsgerät. Anhand dessen kann die Diagnosestation 103 Konfigurationsdaten des ausgewählten Kommunikationsgeräts 101 abfragen. Die Konfigurationsdaten umfassen vorzugsweise einen Geräteidentifikator und eine Kommunikationsnetzadresse des ausgewählten Kommunikationsgeräts 101 sowie eine Kommunikationsnetzadresse und einen Subnetzidentifikator des Konfigurationsdaten-Relay 102, der zusammen mit dem ausgewählten Kommunikationsgerät 101 an ein gemeinsames Subnetz 102 angeschlossen ist.

Der Geräteidentifikator ist im vorliegenden Ausführungsbeispiel ein Universally Unique Identifier (UUID), der als Hash-Wert aus dem Gerätenamen 111 abgeleitet ist und entsprechend Dynamic Host Configuration Protocol (DHCP), Version 4 und 6 zur Geräteidentifikation verwendet werden kann. Mangels umkehrbarer Eindeutigkeit kann der Gerätename 111 jedoch nicht aus dem Hash-Wert bzw. Geräteidentifikator abgeleitet werden. Durch den Subnetzidentifikator wird eine dem ausgewählten Kommunikationsgerät 101 am Konfigurationsdaten-Relay 102 zugeordnete Schnittstelle bezeichnet.

Anhand der abgefragten Konfigurationsdaten des ausgewählten Kommunikationsgeräts 101 kann die Diagnosestation 103 einen der lokalen Konfigurationseinheit 122 zugeordneten Diagnoseserver 121 als Diagnosedatenbereitstellungseinheit kontaktieren und durch diesen den Gerätenamen 111 abfragen, der dem von den abgefragten Konfigurationsdaten umfassten Geräteidentifikator zugeordnet ist. Hierzu steuert der Diagnoseserver 121 eine inverse Adressauflösung durch einen vom Konfigurationsdaten-Relay 102 umfassten mDNS-Peer 110 (Multicast Domain Name System) an. Dabei basiert die inverse Adressauflösung auf Informationen über Zuordnungen zwischen Gerätenamen 111 und Kommunikationsnetzadressen, die entsprechend Multicast DNS Protokoll als Namensauflösungsprotokoll innerhalb des das ausgewählte Kommunikationsgerät 101 und den Konfigurationsdaten-Relay 102 umfassenden Subnetzes verbreitet werden. Vorteilhafterweise umfasst jedes Kommunikationsgerät jeweils einen mDNS-Peer 110 als Protokollverarbeitungseinheit zur Erzeugung und Auswertung von Nachrichten entsprechend Multicast DNS Protokoll. Im Rahmen der inversen Adressauflösungsabfrage bildet der mDNS-Peer 110 des Konfigurationsdaten-Relay 102 die Kommunikationsnetzadresse des ausgewählten Kommunikationsgeräts 101 auf dessen Gerätenamen 111 ab.

Befinden sich das ausgewählte Kommunikationsgerät 101 und die Diagnosestation 103 im selben Subnetz, so entfällt eine Anfrage bei der lokalen Konfigurationseinheit 122 des Konfigurationsdaten-Relay 102. Stattdessen werden in diesem Fall ein Diagnoseserver sowie ein mDNS-Peer der Diagnosestation 103 angesprochen. Die inverse Adressauflösungsabfrage erfolgt analog zu obigen Ausführungen.

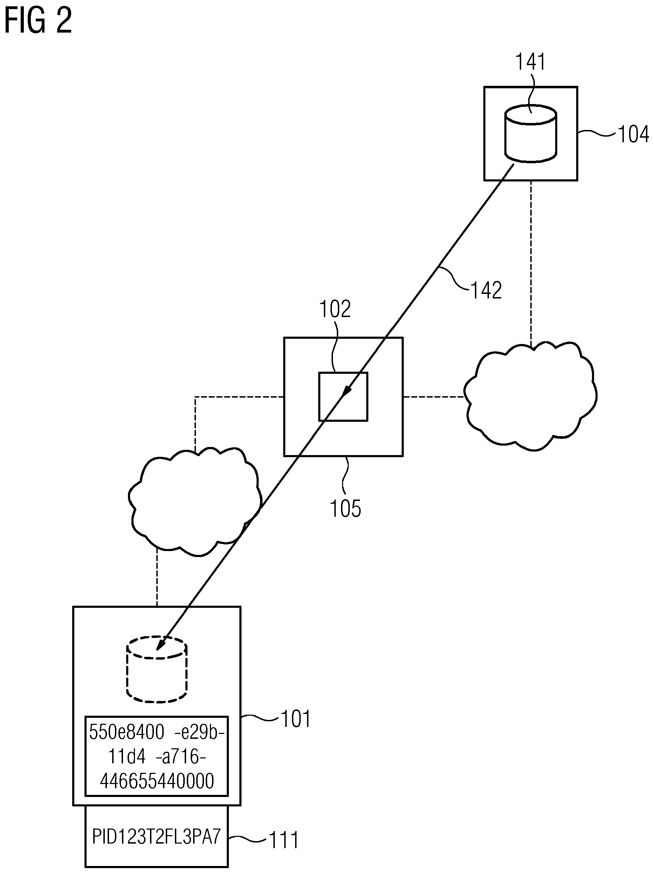

Eine Konfigurationsdatenübermittlung vom Konfigurationsserver 104 an das ausgewählte Kommunikationsgerät 101 kann sowohl direkt als auch indirekt über einen Router 105 entsprechend Figur 2 erfolgen. In diesem Fall umfasst der Router 105 den Konfigurationsdaten-Relay 102 und fügt Informationen über den Subnetzidentifikator sowie über die Kommunikationsnetzadresse des Konfigurationsdaten-Relay 102 in den Datenverkehr 142 zur Konfigurationsdatenübermittlung ein. Somit ist auch dann eine Ermittlung des Gerätenamens 111 möglich, wenn sich die Diagnosestation 103 und das ausgewählte Kommunikationsgerät 101 in verschiedenen Subnetzen befinden, bzw. wenn dem ausgewählten Kommunikationsgerät 101 keine routbare IP-Adresse zugeordnet ist.

## Patentansprüche

1. Verfahren zur Ermittlung von Kommunikationsgerätenamen innerhalb eines industriellen Automatisierungssystems, bei dem
- mittels einer Diagnosestation (103) Konfigurationsdaten eines ausgewählten Kommunikationsgeräts (101) abgefragt werden, dessen Kommunikationsgerätename (111) zu ermitteln ist, wobei die Konfigurationsdaten einen Universally Unique Identifier entsprechend Dynamic Host Configuration Protocol, der als Hash-Wert (111) aus dem Kommunikationsgerätenamen abgeleitet ist und eine Kommunikationsnetzadresse des ausgewählten Kommunikationsgeräts (103) sowie eine Kommunikationsnetzadresse und einen Teilnetzidentifikator einer lokalen Konfigurationseinheit (122) eines Konfigurationsdaten-Relay (102) umfassen, die einem das ausgewählte Kommunikationsgerät (101) umfassenden Teilnetz zugeordnet ist und für einen Konfigurationsserver (104) Konfigurationsanfragen und/oder Konfigurationsdaten weiterleitet,
- die Konfigurationsdaten des ausgewählten Kommunikationsgeräts (101) durch die Diagnosestation (103) aus Aufzeichnungen einer Konfigurationsdatenbank (141), die dem Konfigurationsserver (104) und/oder einem Engineering-System zugeordnet ist, oder aus Datenverkehr zur Konfigurationsübermittlung an das ausgewählte Kommunikationsgerät (101) abgefragt werden,
- die Diagnosestation (103) anhand der abgefragten Konfigurationsdaten ein Datagramm zur Namensabfrage an einen Diagnoseserver (121) übermittelt, der dem das ausgewählte Kommunikationsgerät (101) umfassenden Teilnetz zugeordnet ist,
- der Diagnoseserver (121) anhand des Universally Unique Identifier und/oder der Kommunikationsnetzadresse des ausgewählten Kommunikationsgeräts eine inverse Adressauflösungsabfrage auslöst, die auf Informationen über Zuordnungen zwischen Gerätenamen und Kommunikationsnetzadressen basiert, die innerhalb des das ausgewählte Kommunikationsgerät (101) umfassenden Teilnetzes entsprechend einem Namensauflösungsprotokoll verbreitet werden,
- die Kommunikationsnetzadresse des ausgewählten Kommunikationsgeräts (101) durch die inverse Adressauflösungsabfrage auf dessen Kommunikationsgerätenamen (111) abgebildet wird.

2. Verfahren nach Anspruch 1,
bei dem überprüft wird, ob die Diagnosestation (103) dem das ausgewählte Kommunikationsgerät (101) umfassenden Teilnetz zugeordnet ist, und bei dem das Datagramm zur Namensabfrage bei einem negativen Überprüfungsergebnis an eine dem Diagnoseserver (121) zugeordnete lokale Konfigurationseinheit (122) entsprechend den abgefragten Konfigurationsdaten des ausgewählten Kommunikationsgeräts (101) übermittelt wird.

3. Verfahren nach Anspruch 2,
bei dem durch den Teilnetzidentifikator eine dem ausgewählten Kommunikationsgerät (101) an der lokalen Konfigurationseinheit (122) zugeordnete Schnittstelle bezeichnet wird.

4. Verfahren nach einem der Ansprüche 1 bis 3,
bei dem bei einem über einen Router an das ausgewählte Kommunikationsgerät (101) weitergeleiteten Datenverkehr zur Konfigurationsübermittlung durch den Router Informationen über den Teilnetzidentifikator und über die Kommunikationsnetzadresse der lokalen Konfigurationseinheit (122) eingefügt werden, wobei der Router die lokale Konfigurationseinheit (122) umfasst.

5. Verfahren nach Anspruch 4,
bei dem das Datagramm zur Namensabfrage entsprechend den abgefragten Konfigurationsdaten an die lokale Konfigurationseinheit (122) übermittelt wird, wobei die lokale Konfigurationseinheit (122) dem Diagnoseserver (121) zugeordnet ist.

6. Verfahren nach einem der Ansprüche 1 bis 5,
bei dem die Informationen über Zuordnungen zwischen Gerätenamen (111)und Kommunikationsnetzadressen entsprechend Multicast DNS Protokoll als Namensauflösungsprotokoll verbreitet werden.

7. Verfahren nach Anspruch 6,
bei dem zumindest jedes Kommunikationsgerät innerhalb des das ausgewählte Kommunikationsgerät (101) umfassenden Teilnetzes jeweils eine Protokollverarbeitungseinheit zur Erzeugung und Auswertung von Nachrichten entsprechend Multicast DNS Protokoll umfasst, bei dem der Diagnoseserver (121) seine jeweils zugeordnete Protokollverarbeitungseinheit zur Durchführung der inversen Adressauflösungsabfrage ansteuert und bei dem die Protokollverarbeitungseinheit die Kommunikationsnetzadresse des ausgewählten Kommunikationsgeräts (101) auf dessen Kommunikationsgerätenamen (111) abbildet.

## Claims

1. Method for determining communication device names within an industrial automation system, in which
- a diagnostic station (103) is used to retrieve configuration data relating to a selected communication device (101), the communication device name (111) of which is to be determined, wherein the configuration data comprise a Universally Unique Identifier corresponding to the Dynamic Host Configuration Protocol, which is derived from the communication device name as a hash value (111), and a communication network address of the selected communication device (103) as well as a communication network address and a subnetwork identifier of a local configuration unit (122) of a configuration data relay (102), which configuration unit is assigned to a subnetwork comprising the selected communication device (101) and forwards configuration requests and/or configuration data for a configuration server (104),
- the configuration data relating to the selected communication device (101) are retrieved by the diagnostic station (103) from records in a configuration database (141) assigned to the configuration server (104) and/or to an engineering system or from data traffic for transmitting the configuration to the selected communication device (101),
- on the basis of the retrieved configuration data, the diagnostic station (103) transmits a name query datagram to a diagnostic server (121) assigned to the subnetwork comprising the selected communication device (101),
- on the basis of the Universally Unique Identifier and/or the communication network address of the selected communication device, the diagnostic server (121) initiates an inverse address resolution query which is based on information relating to assignments between device names and communication network addresses distributed within the subnetwork comprising the selected communication device (101) according to a name resolution protocol,
- the communication network address of the selected communication device (101) is mapped to its communication device name (111) by the inverse address resolution query.

2. Method according to Claim 1,
in which a check is carried out in order to determine whether the diagnostic station (103) is assigned to the subnetwork comprising the selected communication device (101), and in which, in the event of a negative checking result, the name query datagram is transmitted to a local configuration unit (122) assigned to the diagnostic server (121) in accordance with the retrieved configuration data relating to the selected communication device (101).

3. Method according to Claim 2,
in which the subnetwork identifier is used to denote an interface assigned to the selected communication device (101) on the local configuration unit (122).

4. Method according to one of Claims 1 to 3,
in which, in the case of data traffic which is forwarded to the selected communication device (101) via a router for the purpose of transmitting the configuration, information relating to the subnetwork identifier and relating to the communication network address of the local configuration unit (122) is inserted by the router, wherein the router comprises the local configuration unit (122).

5. Method according to Claim 4,
in which the name query datagram is transmitted to the local configuration unit (122) in accordance with the retrieved configuration data, wherein the local configuration unit (122) is assigned to the diagnostic server (121).

6. Method according to one of Claims 1 to 5,
in which the information relating to assignments between device names (111) and communication network addresses is distributed in accordance with the multicast DNS protocol as the name resolution protocol.

7. Method according to Claim 6,
in which at least each communication device within the subnetwork comprising the selected communication device (101) respectively comprises a protocol processing unit for generating and evaluating messages in accordance with the multicast DNS protocol, in which the diagnostic server (121) controls its respectively assigned protocol processing unit to carry out the inverse address resolution query, and in which the protocol processing unit maps the communication network address of the selected communication device (101) to its communication device name (111).

## Revendications

1. Procédé de détermination de dénominations d'appareils de communication dans un système d'automatisation industrielle, dans lequel
- au moyen d'un poste (103)de diagnostic, on demande des données de configuration d'un appareil (101) de communication sélectionné, dont la dénomination (111) doit être déterminée, les données de configuration comprenant un universally unique identifier conformément au dynamic host configuration protocol, qui est déduit comme valeur (111) de Hash de la dénomination d'appareil de communication, et une adresse dans le réseau de communication de l'appareil (103) de communication sélectionné, ainsi qu'une adresse dans le réseau de communication et un identificateur dans un réseau partiel d'une unité (122) locale de configuration d'un relais (102) de données de configuration, qui est associé à un réseau partiel comprenant l'appareil (101) de communication sélectionné, et achemine, pour un serveur (104) de configuration, des demandes de configuration et/ou des données de configuration,
- les données de configuration de l'appareil (101) de communication sélectionné sont demandées par le poste (103) de diagnostic à partir d'enregistrements d'une base (141) de données de configuration, qui est associée au serveur (104) de configuration et/ou à un système d'engineering ou à partir d'un trafic de données pour la transmission de configuration à l'appareil (101) de communication sélectionné,
- le poste (103) de diagnostic transmet à un serveur (121) de diagnostic, à l'aide des données de configuration demandées, un datagramme pour la demande de dénomination, qui est associé au réseau partiel comprenant l'appareil (101) de communication sélectionné,
- le serveur (121) de diagnostic déclenche, à l'aide du universally unique identifier et/ou de l'adresse dans le réseau de communication de l'appareil de communication sélectionné, une demande de résolution d'adresse inverse, qui repose sur des informations sur des associations entre des dénominations d'appareil et des adresses dans le réseau de communication, qui sont diffusées conformément à un protocole de résolution de dénomination dans le réseau partiel comprenant l'appareil (101) de communication sélectionné,
- l'adresse dans le réseau de communication de l'appareil (101) de communication sélectionné est représentée par la demande de résolution d'adresse inverse en tant que sa dénomination d'appareil de communication.

2. Procédé suivant la revendication 1,
dans lequel on contrôle si le poste (103) de diagnostic est associé au réseau partiel comprenant l'appareil (101) de communication sélectionné et dans lequel on transmet, conformément aux données de configuration demandées de l'appareil (101) de communication sélectionné, le datagramme pour la demande de dénomination, si le résultat du contrôle est négatif, à une unité (122) de configuration locale associée au serveur (121) de diagnostic.

3. Procédé suivant la revendication 2,
dans lequel on **caractérise, par** l'identificateur dans le réseau partiel, une interface associée à l'appareil (101) de communication sélectionné sur l'unité (122) de configuration locale.

4. Procédé suivant l'une des revendications 1 à 3,
dans lequel, pour un trafic de données acheminé par un routeur à l'appareil (101) de communication sélectionné, on ajoute, pour la transmission de configuration par le routeur, des informations sur l'identificateur dans le réseau partiel et sur l'adresse dans le réseau de communication de l'unité (122) de configuration locale, le routeur comprenant l'unité (122) de configuration locale.

5. Procédé suivant la revendication 4,
dans lequel on transmet à l'unité (122) de configuration locale le datagramme pour la demande de dénomination conformément aux données de configuration demandées, l'unité (122) de configuration locale étant associée au serveur (121) de diagnostic.

6. Procédé suivant l'une des revendication 1 à 5,
dans lequel on diffuse les informations sur des associations entre des dénominations (111) d'appareil et des adresses dans le réseau de communication, conformément au multicast DNS protocol, comme protocole de résolution de dénomination.

7. Procédé suivant la revendication 6,
dans lequel au moins chaque appareil de communication, dans le réseau partiel comprenant l'appareil (101) de communication sélectionné, comprend, respectivement, une unité de traitement de protocole pour produire et exploiter des messages conformément au multicast DNS protocol, dans lequel le serveur (121) de diagnostic commande son unité de traitement de protocole associée respectivement pour effectuer la demande de résolution d'adresse inverse et dans lequel l'unité de traitement de protocole représente l'adresse dans le réseau de communication de l'appareil (101) de communication sélectionné en tant que sa dénomination (111) d'appareil de communication.
